# EUROPEAN PATENT SPECIFICATION

(11) **EP 3 467 280 B1**
(45) Date of publication and mention of the grant of the patent: **20.01.2021**
(21) Application number: 17806281.6
(22) Date of filing: 01.05.2017
(51) Int. Cl.: F01N 3/28, B01D 53/94, F01N 13/00, F01N 3/20, F01N 13/18

(54) **EXHAUST GAS TREATMENT DEVICE**
ABGASVERARBEITUNGSVORRICHTUNG
DISPOSITIF DE TRAITEMENT DE GAZ D'ÉCHAPPEMENT

(30) Priority: 31.05.2016 JP 2016108033
(43) Date of publication of application: 10.04.2019
(73) Proprietor: Hitachi Zosen Corporation, Osaka-shi, Osaka 559-8559 (JP)
(72) Inventor: TANAKA, Hironaka, Osaka-shi, Osaka 559-8559 (JP); OKAZAKI, Shigeki, Osaka-shi, Osaka 559-8559 (JP)
(74) Representative: Grünecker Patent- und Rechtsanwälte PartG mbB
(86) International application number: PCT/JP2017/017137
(87) International publication number: WO 2017/208722

(56) References cited:
- WO-A1-2013/129089
- WO-A1-2016/182806
- DE-B1- 2 220 921
- JP-A- H1 133 409
- JP-A- S6 390 612
- JP-A- H06 264 734
- JP-A- H06 269 679
- JP-A- H10 103 048
- JP-A- H11 138 019
- JP-A- S57 116 119
- JP-A- S61 265 319
- JP-A- S62 294 711
- JP-A- 2013 163 160
- JP-A- 2016 191 381
- US-A- 3 945 803

## Description

### Technical Field

The present invention relates to an exhaust gas treatment device provided with a catalyst unit for treating exhaust gas emitted from ships or the like.

### Background Art

For example, such an exhaust gas treatment device is known as described in JP 5295403 B2 in which a downstream-side grid is provided downstream of a catalyst unit and an upstream-side grid is provided upstream of the catalyst unit, the catalyst unit being held between the downstream-side grid and the upstream-side grid so as to be pressed in the direction of a gas passage.

US 3 945 803 A relates to an elastic support for a ceramic monolithic catalyzer body.

DE 22 20 921 B1 relates to an exhaust system for cleaning exhaust gases using a catalytic method.

JP S62 294711 A relates to a catalytic converter.

JP S57 116119 A relates to a molding method for honeycomb catalyst body cassette.

### Summary of Invention

### Technical Problem

In the exhaust gas treatment device according to the related art, however, the metallic catalyst unit and the metallic grids are in direct contact with each other. Unfortunately, the rolling of a ship or the vibrations of an engine may cause a gap between the grids and the catalyst unit. If a gap appears particularly between the downstream-side grid and the catalyst unit, the gas sealing performance of the exhaust gas treatment device may be reduced.

An object of the present invention is to improve the gas sealing performance of the exhaust gas treatment device.

### Solution to Problem

An exhaust gas treatment device of the present invention is defined in claim 1. Further advantageous embodiments are defined in dependent claims.

### Advantageous Effects of Invention

According to the exhaust gas treatment device of the present invention, the elastic seal member disposed between the downstream-side grid and the catalyst unit is elastically deformed so as to seal a gap between the downstream-side grid and the catalyst unit while absorbing the rolling of a ship and the vibrations of an engine. This can seal gas in the catalyst unit. Thus, the occurrence of a gap due to the rolling of a ship or the vibrations of an engine can be suppressed, thereby improving the gas sealing performance of the exhaust gas treatment device.

### Brief Description of Drawings

[FIG. 1] FIG. 1 is a side cross-sectional view showing an exhaust gas treatment device according to a first embodiment of the present invention.
[FIG. 2] FIG. 2 is a cross-sectional plan view showing the exhaust gas treatment device and a cross-sectional view taken along line V1 of FIG. 1.
[FIG. 3] FIG. 3 is a plan view showing a catalyst unit for the exhaust gas treatment device.
[FIG. 4] FIG. 4 is an exploded side view showing the catalyst unit for the exhaust gas treatment device.
[FIG. 5] FIG. 5 is an enlarged perspective view showing a tubular case for the catalyst unit of the exhaust gas treatment device.
[FIG. 6] FIG. 6 shows elastic deformation of an elastic seal member for the exhaust gas treatment device.
[FIG. 7] FIG. 7 is a cross-sectional enlarged perspective view showing an attachment for the catalyst unit of the exhaust gas treatment device.
[FIG. 8] FIG. 8 is a cross-sectional plan view showing the exhaust gas treatment device and a cross-sectional view taken along line V2 of FIG. 1.
[FIG. 9] FIG. 9 is a cross-sectional plan view showing the exhaust gas treatment device and a cross-sectional view taken along line V3 of FIG. 1.
[FIG. 10] FIG. 10 is a side enlarged view showing an angle and a seal member for the exhaust gas treatment device.
[FIG. 11A] FIG. 11A is a side view showing a second cylinder of the exhaust gas treatment device.
[FIG. 11B] FIG. 11B is a front view showing the second cylinder of the exhaust gas treatment device.
[FIG. 12A] FIG. 12A is a side view showing another second cylinder of the exhaust gas treatment device.
[FIG. 12B] FIG. 12B is a front view showing another second cylinder of the exhaust gas treatment device.
[FIG. 12C] FIG. 12C is a plan view showing another second cylinder of the exhaust gas treatment device.
[FIG. 13] FIG. 13 is a cross-sectional plan view showing the exhaust gas treatment device and a cross-sectional view taken along line V4 of FIG. 1.
[FIG. 14] FIG. 14 is a cross-sectional plan view showing the exhaust gas treatment device and a cross-sectional view taken along line V5 of FIG. 1.
[FIG. 15] FIG. 15 shows the relationship between an engine load and an NH₃ slip in the exhaust gas treatment device and an exhaust gas treatment device according to the related art.
[FIG. 16] FIG. 16 is a side cross-sectional view showing an exhaust gas treatment device according to a second embodiment of the present invention.
[FIG. 17] FIG. 17 is an exploded side view showing tubular cases for a catalyst unit according to the second embodiment of the present invention.
[FIG. 18] FIG. 18 is an explanatory drawing showing the effect of the exhaust gas treatment device.
[FIG. 19] FIG. 19 is an explanatory drawing showing the effect of the exhaust gas treatment device.
[FIG. 20] FIG. 20 is a side cross-sectional view showing an exhaust gas treatment device being manufactured according to an example which is not part of the present invention.
[FIG. 21] FIG. 21 is a cross-sectional plan view showing the exhaust gas treatment device and a cross-sectional view taken along line V6 of FIG. 20.
[FIG. 22A] FIG. 22A is a partially enlarged plan view showing an intermediate pressing tool for the exhaust gas treatment device.
[FIG. 22B] FIG. 22B is a partially enlarged side view showing the intermediate pressing tool for the exhaust gas treatment device.
[FIG. 23A] FIG. 23A is a partially enlarged plan view showing the intermediate pressing tool for the exhaust gas treatment device.
[FIG. 23B] FIG. 23B is a partially enlarged side view showing the intermediate pressing tool for the exhaust gas treatment device.
[FIG. 24] FIG. 24 is a side cross-sectional view showing the exhaust gas treatment device.

### Description of Embodiments

### (First Embodiment)

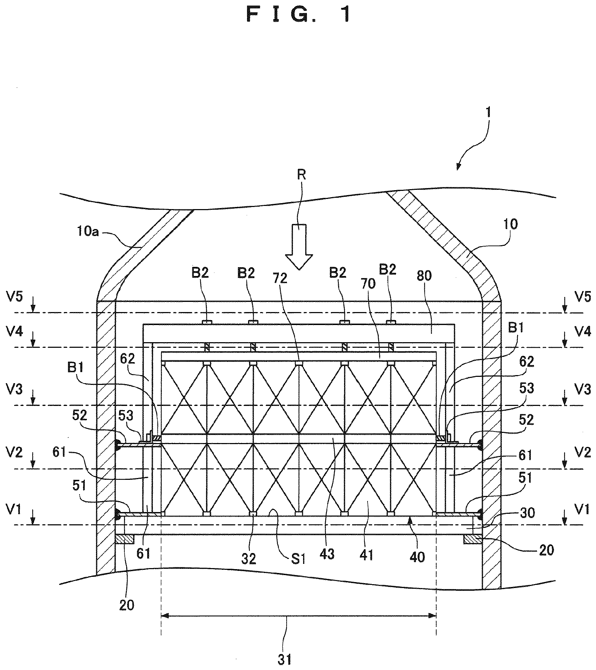

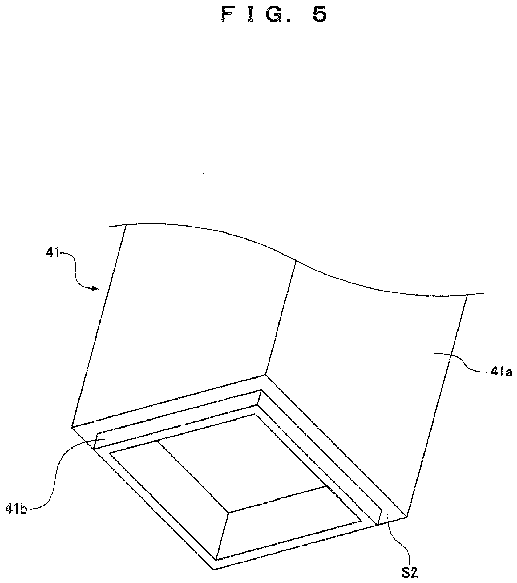

Referring to FIGS. 1 to 14, the configuration of an exhaust gas treatment device according to a first embodiment of the present invention will be first described below. As shown in FIG. 1, the exhaust gas treatment device 1 includes a vessel body 10, a holding part 20, a downstream-side grid 30, a catalyst unit 40, a first seal plate 51, a second seal plate 52, a plurality of first cylinders 61, a plurality of second cylinders 62, an upstream-side grid 70, and a grid retainer 80.

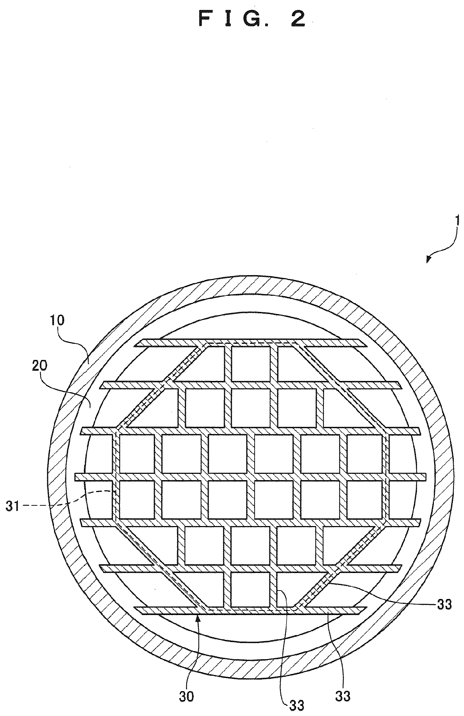

The vessel body 10 forms a gas passage R for flow of exhaust gas emitted from a ship or the like. The exhaust gas treatment device 1 according to the present embodiment is a so-called vertical exhaust-gas treatment device with a vertical gas passage R. As shown in FIGS. 1 and 2, the vessel body 10 is, for example, cylindrical in shape and contains the holding part 20 provided along the inner periphery of the vessel body 10. The holding part 20 is, for example, a thick metallic ring that is circumferentially welded to the interior of the vessel body 10. As shown in FIG. 1, a cap 10a is provided upstream of the vessel body 10 in the gas passage R. The cap 10a has the same diameter as the vessel body 10 at the lower end of the cap 10a and tapers toward the upstream side.

As shown in FIG. 1, the downstream-side grid 30 has a placement area 31, which is provided for placing the catalyst unit 40, on an upper end face S1. Specifically, as shown in FIG. 2, the downstream-side grid 30 includes a plurality of bars 33 that are longitudinally, laterally, and diagonally combined in a grid-like fashion. The bars 33 form the placement area 31. Some of the bars 33 extend out of the placement area 31. The ends of the bars 33 extending out of the placement area 31 are welded onto the holding part 20 provided in the vessel body 10.

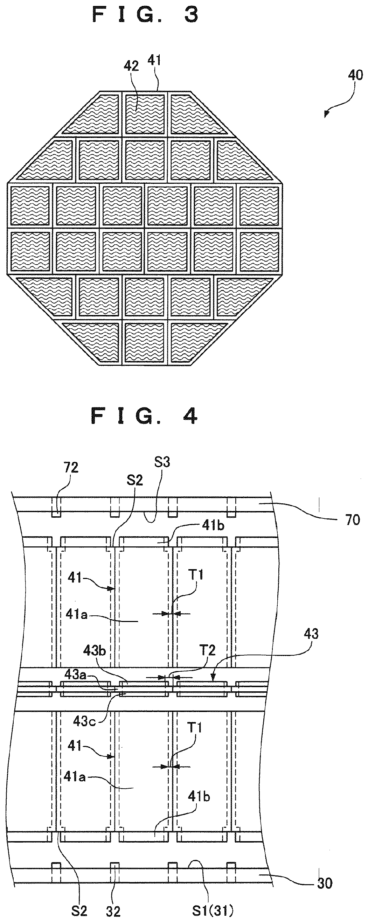

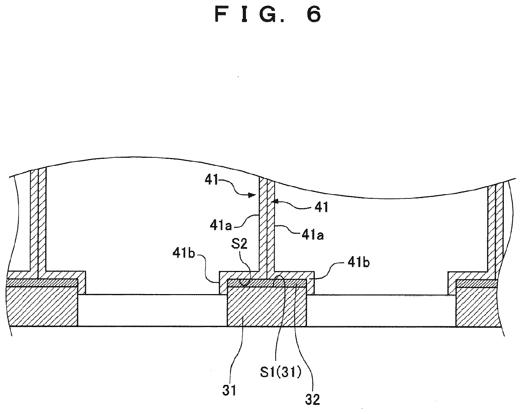

As shown in FIGS. 3 and 4, the catalyst unit 40 includes a plurality of tubular cases 41 shaped like square poles, a catalyst 42 (see FIG. 3) contained in the tubular cases 41, and cylindrical attachments 43 (see FIG. 4) holding the ends of the tubular cases 41. The catalyst 42 for denitration contains a reducer, e.g., ammonia that reacts with NOx contained in exhaust gas. The catalyst 42 has a corrugated structure including a plurality of parallel plates and corrugated plates provided between the plates in horizontal cross section. As shown in FIGS. 4 to 6, the tubular case 41 has a body 41a and a projecting portion 41b that projects from the body 41a toward the downstream-side grid 30 (see FIGS. 4 and 6) or the upstream-side grid 70 (see FIG. 4). The projecting portion 41b is fit into the downstream-side grid 30 or the upstream-side grid 70. In this configuration, an elastic seal member 32 is provided between the body 41a and the downstream-side grid 30. Specifically, the elastic seal member 32 is bonded at least over the placement area 31 (see FIGS. 1 and 2) on the upper end face S1 of the downstream-side grid 30, more specifically, between the upper end face S1 of the downstream-side grid 30 and an end face S2 of the tubular case 41. Similarly, an elastic member 72 (see FIG. 4) is bonded to a lower end face S3 of the upstream-side grid 70 and is interposed between the end face S2 of the body 41a and the lower end face S3 of the upstream-side grid 70. The tubular cases 41 are disposed between the downstream-side grid 30 and the upstream-side grid 70. The tubular cases 41 are vertically stacked via the attachment 43, forming the two-stage configuration of the catalyst unit 40.

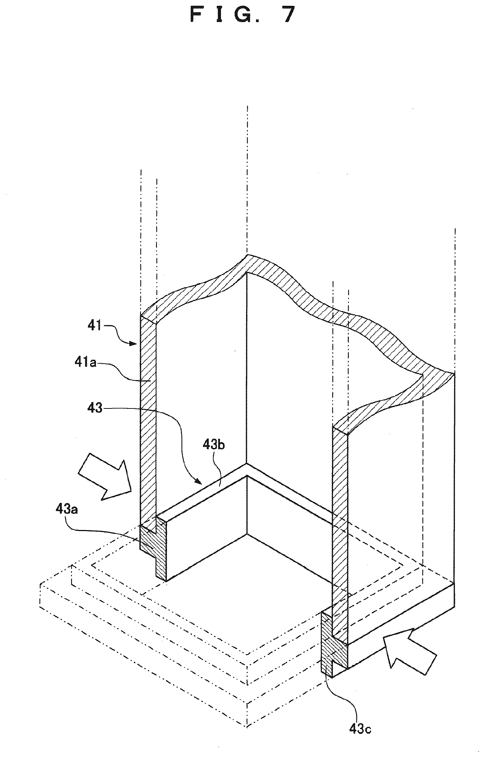

As shown in FIGS. 4 and 7, the attachment 43 includes the body part 43a having the same external dimension as the tubular case 41 and two projecting portions 43b and 43c smaller than the external dimension. The projecting portion 43b projects upward from the body part 43a, whereas the projecting portion 43c projects downward from the body part 43a. The projecting portions 43b and 43c are each fit into the body 41a of the tubular case 41. The attachment 43 is not filled with the catalyst 42. As shown in FIG. 4, the tubular case 41 has a tubular thickness T1 smaller than a tubular thickness T2 of the body part 43a of the attachment 43. This configuration reduces the weight of the tubular case 41 to be filled with the catalyst 42, facilitating handling of the tubular case 41 so that the tubular case 41 is easily moved by man power to be placed into the downstream-side grid 30.

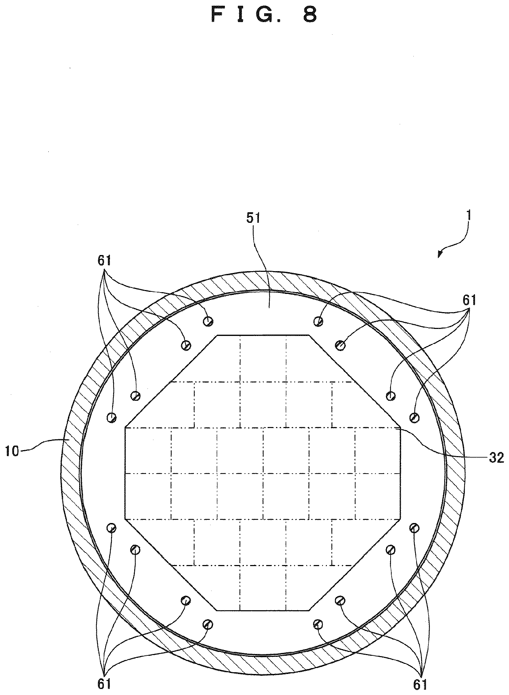

As shown in FIGS. 1 and 8, the first seal plate 51 is a circular plate member, from which the same flat shape as the placement area 31 is cut. The outside diameter of the first seal plate 51 is substantially equal to the inside diameter of the vessel body 10 and extends out of the upper end face S1 of the downstream-side grid 30. The outer circumference of the first seal plate 51 is welded to the inside of the vessel body 10. The first seal plate 51 is laid outside the placement area 31 of the downstream-side grid 30 on the upper end face S1. The first seal plate 51 in this state is welded to the downstream-side grid 30.

As shown in FIG. 1, the first cylinders 61 are raised on the first seal plate 51. The first cylinders 61 in this state are welded to the first seal plate 51. As shown in FIG. 8, the first cylinders 61 are, for example, rod members that are circular in cross section and are dispersed along the inner circumference of the vessel body 10. As shown in FIG. 1, the second seal plate 52 is laid on the upper ends of the first cylinders 61. The second seal plate 52 in this state is welded to the first cylinders 61. In order to prevent the inclination of the first cylinders 61, recessed portions having shapes identical to the first cylinders 61 in cross section may be formed on the first seal plate 51 and the second seal plate 52 and then the first cylinders 61 may be fit into the recessed portions.

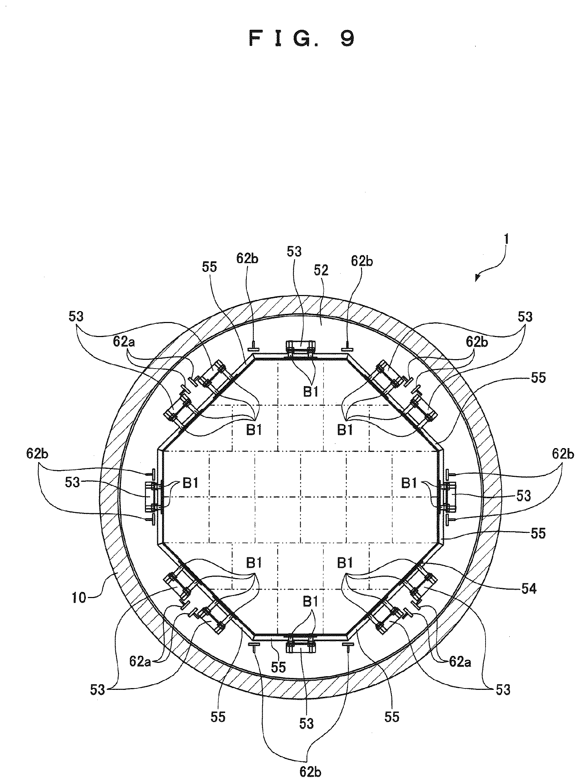

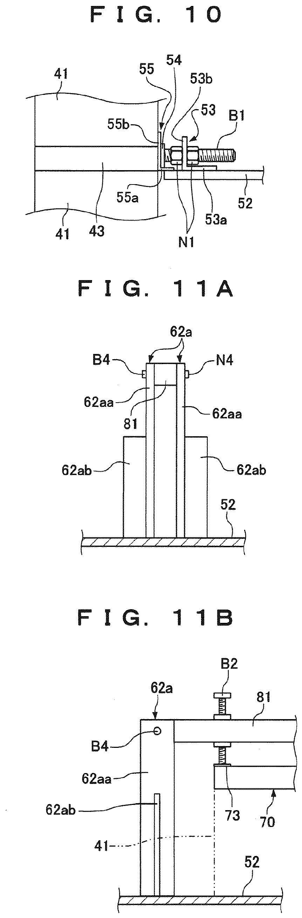

As shown in FIGS. 1 and 9, the second seal plate 52 has the same shape as the first seal plate 51. The outer circumference of the second seal plate 52 is also welded to the inside of the vessel body 10. As shown in FIG. 9, a plurality of angles 53 are fixed onto the second seal plate 52 so as to be dispersed along the circumferential direction. As shown in FIG. 10, the angles 53 each include a bottom plate 53a and a side plate 53b. The bottom plate 53a is welded to the second seal plate 52. The side plate 53b is formed perpendicularly to the bottom plate 53a and has a through hole for a bolt B1. A retainer plate 54 is attached to a tip end of the bolt B1. The bolt B1 and a nut N1 are fastened so as to press the attachment 43 of the catalyst unit 40 from the outer circumferential side of the catalyst unit 40 via the retainer plate 54. This fixes the catalyst unit 40 in a direction (horizontal direction) perpendicular to the direction of the gas passage R (see FIG. 1).

Furthermore, a seal member 55 is provided between the retainer plate 54 and the attachment 43. The seal member 55 is, for example, a metallic L-shaped member that includes a bottom plate 55a and a side plate 55b. As shown in FIG. 6, the seal member 55 is provided over the outer circumference of the catalyst unit 40. The bottom plate 55a is brought into contact with the second seal plate 52 by its own weight. The side plate 55b is brought into contact with the attachment 43 by a press from the retainer plate 54. Thus, the seal member 55 comes into contact with both of the second seal plate 52 and the catalyst unit 40, thereby sealing a gap between the second seal plate 52 and the catalyst unit 40.

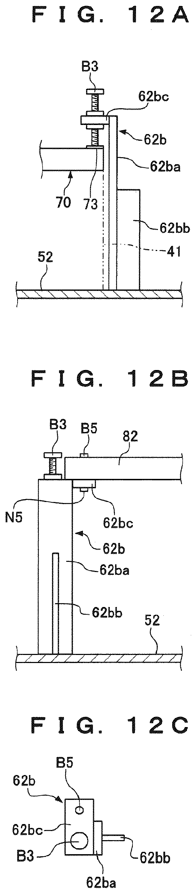

As shown in FIG. 1, the second cylinders 62 are raised on the second seal plate 52. The second cylinders 62 in this state are welded to the second seal plate 52. The second cylinders 62 include second cylinders 62a and second cylinders 62b. As shown in FIGS. 11A and 11B, the second cylinder 62a includes a plate body 62aa and a plate support 62ab. In order to prevent the inclination of the body 62aa, the support 62ab is mounted perpendicularly to the body 62aa. As shown in FIGS. 12A, 12B, and 12C, the second cylinder 62b includes a plate support 62bb mounted perpendicularly to a plate body 62ba. On the upper end of the body 62ba of the second cylinder 62b, a plate 62bc is mounted in the horizontal direction perpendicular to the body 62ba.

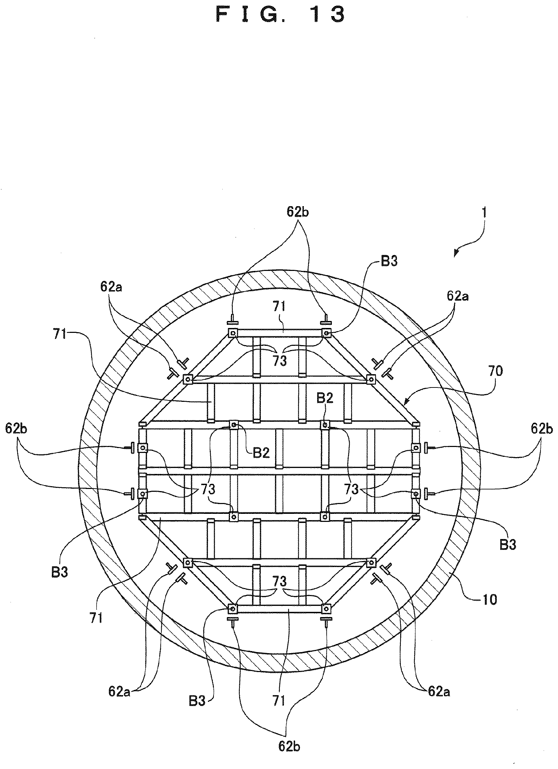

As shown in FIG. 1, the upstream-side grid 70 is provided on the opposite side of the catalyst unit 40 from the downstream-side grid 30, that is, on the catalyst unit 40. As shown in FIG. 13, specifically, the upstream-side grid 70 includes a plurality of bars 71 that are longitudinally, laterally, and diagonally combined in a grid-like fashion. The upstream-side grid 70 includes a plurality of plates 73 that are provided on the bars 71 or the intersections of the bars 71.

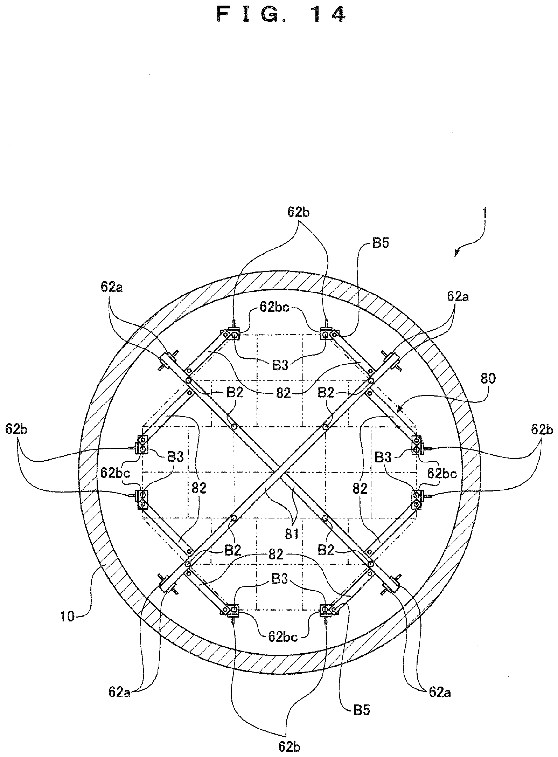

As shown in FIG. 1, the grid retainer 80 is further provided on the upstream-side grid 70. The grid retainer 80 includes, as shown in FIG. 14, two main bars 81 crossing each other at right angles at the center of the vessel body 10, and branches 82 from the two main bars 81. The main bar 81 is supported with one end and the other end held by the pair of second cylinders 62a. Specifically, as shown in FIGS. 11A and 11B, one end of the main bar 81 and the bodies 62aa of the pair of second cylinders 62a are fastened with the bolt B4 and the nut N4. The branch 82 has one end supported by the second cylinder 62b. Specifically, as shown in FIG. 12B, one end of the branch 82 is placed on the horizontal plate 62bc of the second cylinder 62b, and the branch 82 and the plate 62bc are fastened with a bolt B5 and a nut N5. Thus, the grid retainer 80 is fixed by the second cylinders 62a and 62b.

The main bars 81 of the grid retainer 80 shown in FIG. 14 are each provided with a plurality of vertical inner screws. The horizontal plates 73 of the upstream-side grid 70 in FIGS. 11B and 13 are pressed from above by bolts B2 through the inner screws. Furthermore, the plate 62bc of the second cylinder 62b is also provided with vertical inner screws. The plates 73 of the upstream-side grid 70 in FIGS. 12A and 13 are pressed from above by bolts B3 through the inner screws. Thus, the catalyst unit 40 is interposed between the downstream-side grid 30 and the upstream-side grid 70 in the direction of the gas passage R, and the elastic seal member 32 is pressed to be elastically deformed as shown in FIG. 6. The elastic seal member 32 is elastically deformed so as to seal a gap between the downstream-side grid 30 and the catalyst unit 40. Moreover, the elastic member 72 is also pressed to be elastically deformed.

In the exhaust gas treatment device 1 according to the present embodiment, the elastic seal member 32 is provided between the body 41a of the tubular case 41 and the downstream-side grid 30, and the elastic member 72 is provided between the body 41a of the tubular case 41 and the upstream-side grid 70. The elastic seal member 32 and the elastic member 72 are pressed to be elastically deformed in the flowing direction of exhaust gas. This can improve the gas sealing performance of the exhaust gas treatment device 1. The detail will be discussed below.

For example, in the exhaust gas treatment device according to the related art, the elastic member is not used between the tubular case and the grids and thus the rolling of a ship or the vibrations of an engine may cause a gap between the grids and the catalyst unit. This may deteriorate the gas sealing performance of the exhaust gas treatment device. Regarding this point, in the exhaust gas treatment device 1 according to the present embodiment, the elastic seal member 32 and the elastic member 72 are elastically deformed, so that the elastic seal member 32 seals a gap between the downstream-side grid 30 and the catalyst unit 40 while absorbing the rolling of a ship and the vibrations of an engine. This can seal gas in the catalyst unit 40. Thus, the occurrence of a gap due to the rolling of a ship or the vibrations of an engine can be suppressed, thereby improving the gas sealing performance of the exhaust gas treatment device. Furthermore, it can be expected that a vertical dimension error of the tubular case 41 can be absorbed by the elastic seal member 32 and the elastic member 72.

Moreover, the catalyst unit 40 is pressed by the bolt B1 from the outer circumferential side so as to be fixed in a direction (horizontal direction) perpendicular to the direction of the gas passage R. This can suppress the occurrence of a gap between the downstream-side grid and the catalyst case due to the rolling of a ship or the vibrations of an engine, thereby improving the gas sealing performance of the exhaust gas treatment device 1. In this configuration, the bolt B1 horizontally fixing the catalyst unit 40 presses the body 43a (see FIG. 10) of the attachment 43 of the catalyst unit 40. The tubular case 41 may be pressed to fix the catalyst unit 40 perpendicularly to the gas passage R. However, the tubular case 41 is filled with the catalyst 42 and has the small thickness T1 for ease of handling. Thus, a large force applied to the tubular case 41 may considerably deform the tubular case 41 so as to damage the catalyst 42.

The tubular thickness T2 of the body part 43a of the attachment 43 is larger than the tubular thickness T1 of the tubular case 41, so that the body 43a of the attachment 43 is not easily deformed by a certain force. Furthermore, the attachment 43 is not filled with the catalyst 42 and thus the catalyst 42 is not damaged even if the body 43a of the attachment 43 is deformed to some extent. As shown in FIGS. 4 and 7, the attachment 43 is configured such that the projecting portions 43b and 43c are each fit into the body 41a of the tubular case 41. Thus, even when the attachment 43 is pressed, a force is not applied to the tubular case 41. With this configuration, the catalyst unit 40 can be more firmly fixed by pressing the body 43a of the attachment 43.

Moreover, in the exhaust gas treatment device 1 the seal member 55 is provided between the retainer plate 54 and the attachment 43, sealing a gap between the second seal plate 52 and the catalyst unit 40. Specifically, in the present embodiment, the elastic seal member 32 seals gas on the downstream-side grid 30 and the seal member 55 seals gas on the second seal plate 52 disposed upstream of the downstream-side grid 30. This leads to two-step gas sealing, achieving an excellent gas sealing performance.

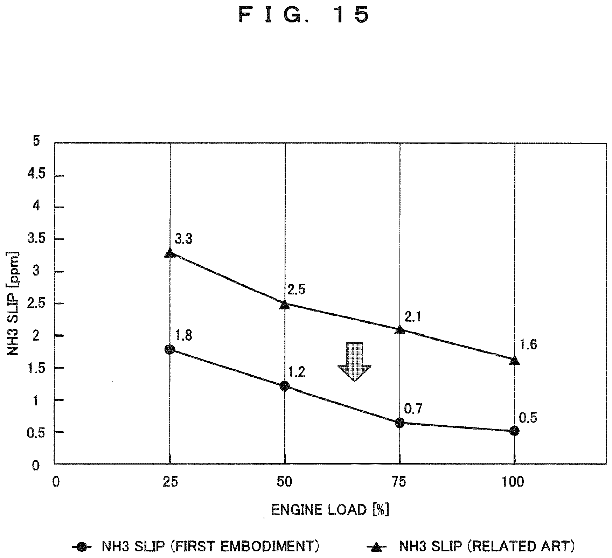

FIG. 15 shows a comparison result between the exhaust gas treatment device according to the related art and the exhaust gas treatment device 1 according to the present embodiment. The exhaust gas treatment device according to the related art is not provided with the elastic seal member 32, the elastic member 72, and the seal member 55 unlike the structure of the exhaust gas treatment device 1 according to the present embodiment. The horizontal axis indicates an engine load. The vertical axis indicates the amount of ammonia (hereinafter, will be referred to as NH₃ slip) used as a reducing agent. Ammonia is detected downstream of the downstream-side grid 30 without reacting with NOx in exhaust gas. As shown in FIG. 15, in the structure of the present embodiment, the NH₃ slip was reduced as compared with the structure of the related art regardless of an engine load. The reduction in NH₃ slip means that the amount of NH₃ reacting with NOx increases so as to improve the gas sealing performance of the exhaust gas treatment device.

Examples of the elastic seal member 32 and the elastic member 72 include a gasket having heat resistance up to, for example, 800°C. The gasket is formed by soaking, into a heat-resistant material, a woven fabric of metal (stainless steel) wires used as the warp and metal (stainless steel) wire ceramic yarn used as the weft, and then performing endless machining on the woven fabric. Moreover, the elastic seal member 32 and the elastic member 72 may be shaped with a thickness of, for example, 3 mm and a compressibility of 58% under a pressure of, for example, 5.9 MPa. However, the elastic seal member and the elastic member of the present invention are not limited to the specific conditions. The inside of the vessel body 10 reaches a high temperature and thus the elastic seal member and the elastic member preferably have heat resistance of, for example, at least 500°C.

In the exhaust gas treatment device 1 according to the present embodiment, the elastic seal member 32 is provided between the tubular case 41 and the downstream-side grid 30, and the elastic member 72 is provided between the tubular case 41 and the upstream-side grid 70. The present invention is defined by the appended claims. Specifically, the gas sealing performance of the exhaust gas treatment device can be improved only by the elastic seal member 32 provided between the tubular case 41 and the downstream-side grid 30. If the elastic member 72 is provided in addition to the elastic seal member 32, the effect of absorbing the rolling of a ship or the like and the vibrations of an engine can be improved.

Moreover, in the exhaust gas treatment device 1 according to the present embodiment, the catalyst unit 40 includes the tubular cases 41 disposed in two stages. The present invention is defined by the appended claims. The catalyst unit 40 has at least two stages, in order to improve the gas sealing performance, it is preferable that the seal plates and the cylinders are alternately disposed as many as the number of stages of the catalyst unit 40 and the attachment 43 is provided between the tubular cases 41 so as to be pressed from the outer circumferential side.

Moreover, in the exhaust gas treatment device 1 according to the present embodiment, the catalyst unit 40 is pressed and fixed with the bolts B1, B2, and B3. The present invention is defined by the appended claims. For example, the catalyst unit 40 can be fixed perpendicularly to the gas passage R also by disposing a retainer, e.g., a spring between the angle 53 and the attachment 43. Similarly, the catalyst unit 40 can be fixed in the direction of the gas passage R by disposing a retainer between the grid retainer 80 and the upstream-side grid 70.

In the present embodiment, the elastic seal member 32 and the seal member 55 are configured for gas sealing in two steps. The present invention is defined by the appended claims. Specifically, even if gas is sealed in the vessel body 10 only by the elastic seal member 32 without the seal member 55, the gas sealing performance can be improved as compared with the configuration of the exhaust gas treatment device not provided with the elastic seal member 32 or the seal member 55 according to the related art.

### (Second Embodiment)

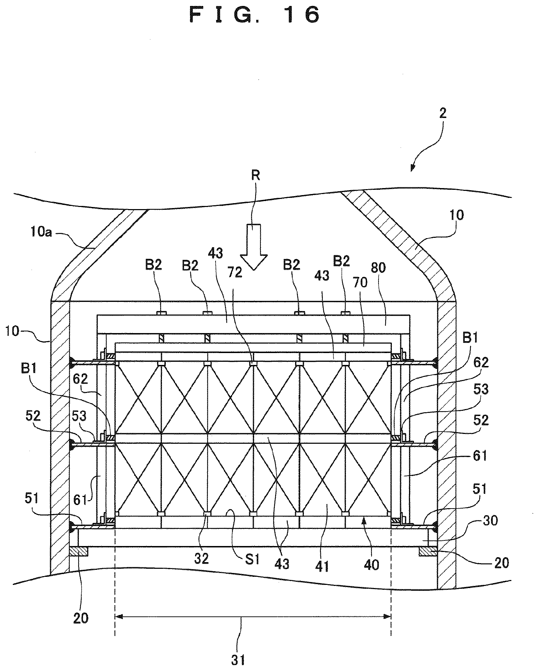

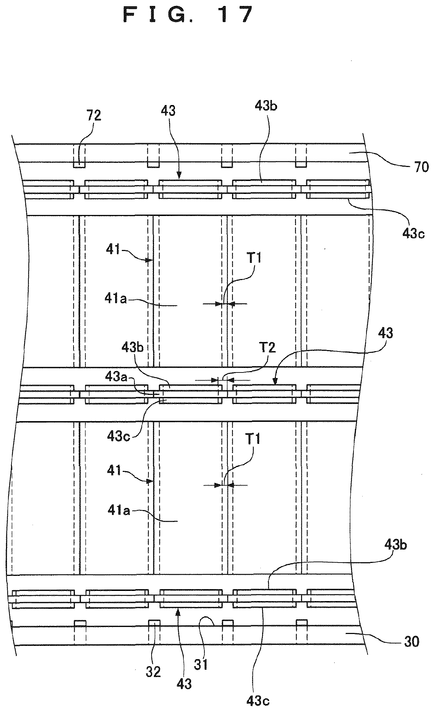

Regarding an exhaust gas treatment device according to a second embodiment of the present invention, only differences from the exhaust gas treatment device 1 according to the first embodiment will be described below. As shown in FIGS. 1 and 4, in the exhaust gas treatment device 1 according to the first embodiment, the attachment 43 is provided between the tubular cases 41. In contrast, as shown in FIGS. 16 and 17, an exhaust gas treatment device 2 according to the second embodiment is configured such that attachments 43 are provided between a downstream-side grid 30 and tubular cases 41 and between an upstream-side grid 70 and tubular cases 41 in addition to attachments 43 provided between the tubular cases 41. In other words, the attachments 43 are disposed in three stages.

As shown in FIG. 17, the tubular case 41 only includes a body 41a without a projecting portion unlike in the configuration of the first embodiment. The attachment 43 of the first stage from the downstream side of a gas passage R has a downward projecting portion 43c fit into the downstream-side grid 30 and an upward projecting portion 43b fit into the tubular case 41. The attachment 43 of the second stage has projecting portions 43b and 43c fit into the respective tubular cases 41. The attachment 43 of the third stage has an upward projecting portion 43b fit into the upstream-side grid 70 and a downward projecting portion 43c fit into the tubular case 41.

The bodies 43a of the attachments 43 are pressed from the outer circumferential side of the catalyst unit 40. A specific configuration for pressing the body 43a is identical to that of the first embodiment shown in FIG. 10 and thus the explanation thereof is omitted.

In the exhaust gas treatment device 2 according to the present embodiment, the attachments 43 in three stages are each pressed in the horizontal direction from the outer circumferential side of the catalyst unit 40. Thus, the catalyst unit 40 can be more firmly fixed than in the first embodiment in which the attachments 43 in the single stage are pressed from the outer circumferential side.

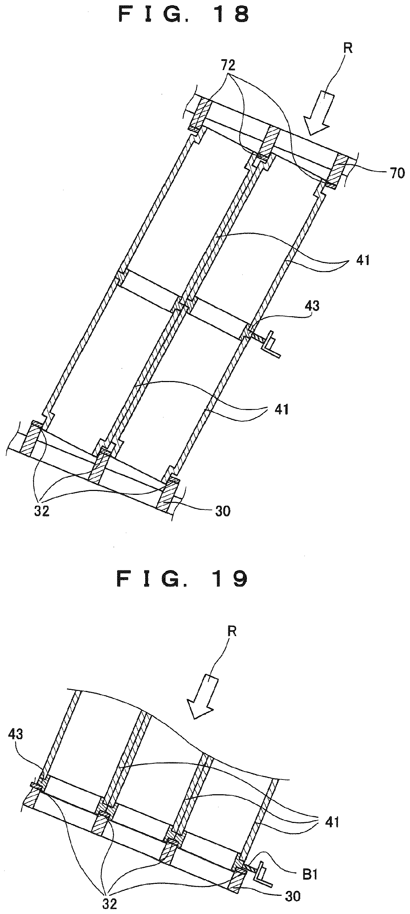

Moreover, in the exhaust gas treatment device 2 according to the present embodiment, the inclination of the tubular case 41 can be suppressed. For example, the tubular cases 41 may be attached while the body of a ship is inclined by 20° or more. In this case, without the attachments 43 between the tubular cases 41 and the downstream-side grid 30, the tubular cases 41 being fit into the downstream-side grid 30 may be inclined as shown in FIG. 18. Even if the tubular cases 41 are pressed in the direction of the gas passage R in this case, elastic seal members 32 cannot be evenly pressed, thereby deteriorating the gas sealing performance of the exhaust gas treatment device.

If the attachments 43 are provided between the tubular cases 41 and the downstream-side grid 30, the attachments 43 being fit into the downstream-side grid 30 are hardly displaced as shown in FIG. 19 while the body of a ship is inclined by about 20° from the horizontal direction. This is because the attachment 43 is lower than the tubular case 41 and the center of gravity of the attachment 43 is close to the downstream-side grid 30. After the attachment 43 fit into the downstream-side grid 30 is fixed with a bolt B1, the tubular case 41 is fit to the attachment 43 with a minimum clearance. Since a displacement of the tubular case 41 can be suppressed, the elastic seal member 32 can be evenly pressed, thereby improving the gas sealing performance of the exhaust gas treatment device. This effect can be obtained if the attachments 43 are provided at least between the downstream-side grid 30 and the tubular cases 41. In other words, the attachments 43 may not be provided between the upstream-side grid 70 and the tubular cases 41.

Moreover, in the exhaust gas treatment device 2 according to the present embodiment, the tubular case 41 may only have the body 41a without a projecting portion 41b. For example, if the catalyst units 40 are provided in three stages and the attachments 43 are provided only between the tubular cases 41 as in the first embodiment, the tubular cases 41 in the first and third stages have the projecting portions 41b but the tubular cases 41 in the second stage interposed between the attachments 43 do not have any projecting portions. In this case, it is necessary to prepare different parts for the tubular cases 41 in the first and third stages and the tubular cases 41 in the second stage. In the present embodiment, the tubular cases 41 in the first to third stages only include the bodies 41a, thereby reducing the number of parts.

### (Further Example)

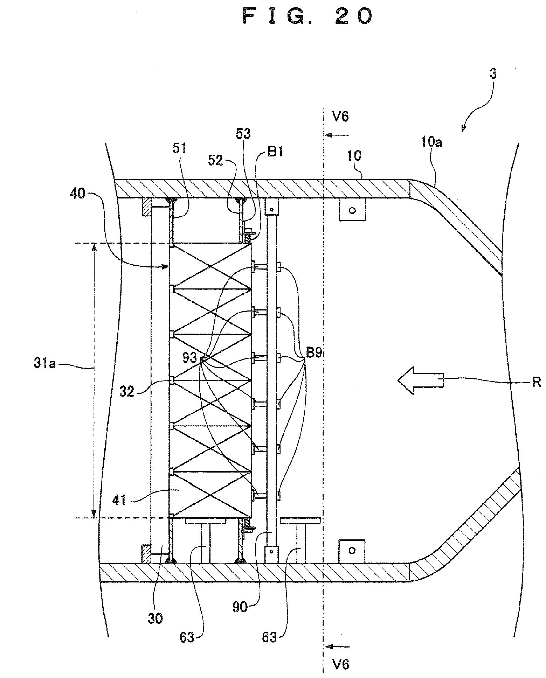

Referring to FIGS. 20 to 24, an exhaust gas treatment device 3 according to another example which is not part of the present invention will be described below. The exhaust gas treatment devices 1 and 2 according to the first and second embodiments are so-called vertical exhaust-gas treatment devices. The exhaust gas treatment device 3 according to another example is a so-called horizontal exhaust gas treatment device with a horizontal gas passage R. The basic configuration of the exhaust gas treatment device 3 is identical to the laid vertical exhaust gas treatment device 1. The another example is different from the first embodiment as follows:

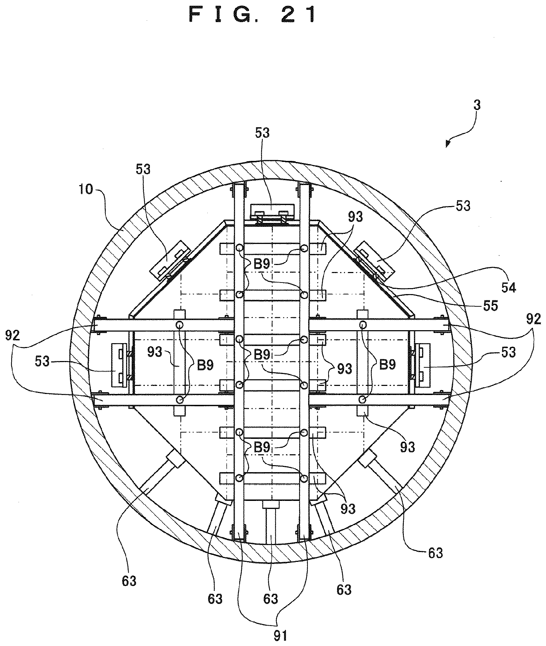

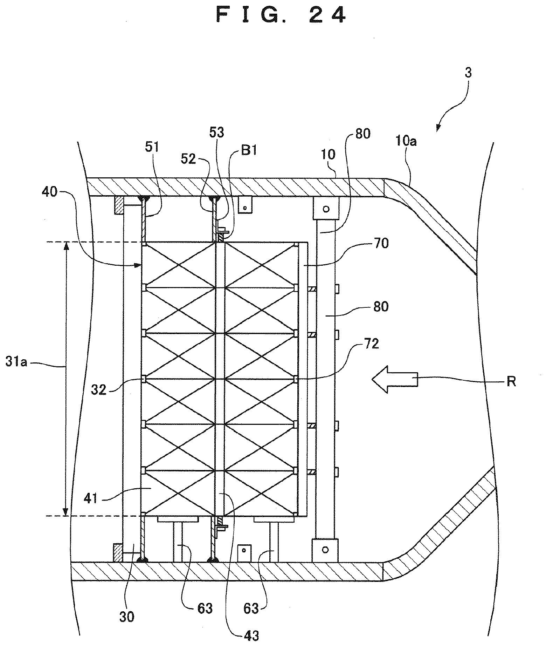

First, the exhaust gas treatment device 3 is not provided with the first and second cylinders described in the first embodiment. As shown in FIGS. 20 and 24, a plurality of support columns 63 that support a catalyst unit 40 from below are provided instead of the first and second cylinders. Moreover, a grid retainer 80 (see FIG. 24) is attached to, for example, the interior of a vessel body 10. As shown in FIG. 21, it is not necessary to provide a seal member 55 over the outer circumference of the catalyst unit 40. Specifically, the seal member 55 is not provided under the catalyst unit 40 but is provided only on the top and the side of the catalyst unit 40. This is because a clearance is hardly formed between the bottom of the catalyst unit 40 and a second seal plate 52 by the weight of the catalyst unit 40 and thus sealing with the seal member 55 is not necessary under the catalyst unit 40. For the same reason, an angle 53 and a retainer plate 54 are not provided under the catalyst unit 40.

In the case of the vertical exhaust gas treatment unit described in the first and second embodiments, when the catalyst unit 40 is placed in the placement area 31 of the downstream-side grid 30, the elastic seal member 32 is pressed to a certain degree by the weight of the catalyst unit 40, so that the catalyst unit 40 is substantially uniformly placed in the vertical direction. In the case of the horizontal exhaust gas treatment device, the weight of the catalyst unit 40 is not applied to the elastic seal member 32 and thus the catalyst unit 40 is likely to be unevenly placed in the horizontal direction. Thus, in the another example, each stage of the tubular cases 41 is pressed in the direction of the gas passage R.

Specifically, as shown in FIG. 20, the tubular cases 41 in the first stage are pressed with an intermediate pressing tool 90 from the upstream side of the tubular cases 41 fit into a downstream-side grid 30. The intermediate pressing tool 90 includes, as shown in FIG. 21, two vertical bars 91, four horizontal bars 92 including two horizontal bars on the right and two horizontal bars on the left, and long plates 93 extending across the two vertical bars 91 or the two horizontal bars 92.

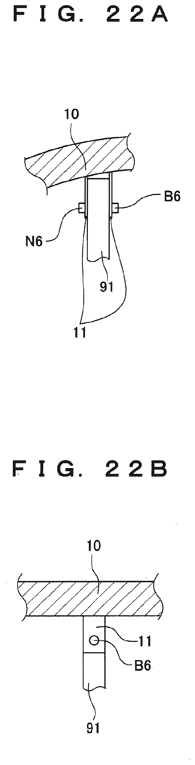

The vertical bars 91 are each attached to the inner circumference of a vessel body 10. Specifically, as shown in FIGS. 22A and 22B, one end of the vertical bar 91 is fastened with a bolt B6 and a nut N6 while being held by a pair of projecting plates 11 provided on the inner circumference of the vessel body 10.

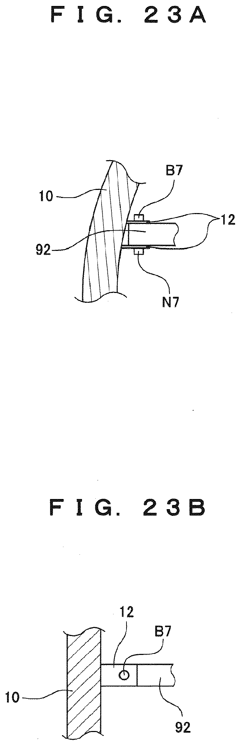

The horizontal bar 92 has one end attached to the inner circumference of the vessel body 10 and the other end attached to the vertical bar 91. Specifically, as shown in FIGS. 23A and 23B, one end of the horizontal bar 92 is fastened with a bolt B7 and a nut N7 while being held by a pair of projecting plates 12 provided on the inner circumference of the vessel body 10. The other end of the horizontal bar 92 is fastened with a bolt and a nut while being held by projecting plates provided on the right or left side of the vertical bar 91.

The vertical bar 91 and the horizontal bar 92 are each provided with horizontal inner screws. As shown in FIGS. 20 and 21, bolts B9 are inserted into the inner screws. The long plate 93 is fixed to one end of the bolt B9. The long plates 93 are caused to press the tubular cases 41 in the direction of the gas passage R by adjusting the bolts B9. Thus, an elastic seal member 32 interposed between the tubular case 41 and the downstream-side grid 30 is pressed in the direction of the gas passage R, thereby uniformly placing the tubular cases 41 in the first stage in the horizontal direction.

Thereafter, the intermediate pressing tool 90 is removed, the attachments 43 are disposed upstream of the tubular cases 41 in the first stage, and the tubular cases 41 in the second stage are disposed upstream of the attachments 43. As shown in FIG. 24, an upstream-side grid 70 is provided upstream of the tubular cases 41 in the second stage so as to be pressed by a grid retainer 80 as in the first and second embodiments. Thus, an elastic member 72 interposed between the tubular cases 41 and the upstream-side grid 70 is pressed in the direction of the gas passage R. A specific method of attaching the grid retainer 80 to the interior of the vessel body 10 is similar to the method of attaching the intermediate pressing tool 90 to the interior of the vessel body 10 as shown in FIGS. 22A, 22B, 23A, and 23B, for example. Thus, the detailed explanation thereof is omitted.

In the exhaust gas treatment device 3 according the another example, the intermediate pressing tool 90 is configured to press each stage of the tubular cases 41 in the direction of the gas passage R. This can uniformly place the tubular cases 41 in the horizontal direction. Thus, like the effect of the first embodiment, the elastic seal member 32 can seal gas in the catalyst unit 40 while the elastic seal members 32 and the elastic member 72 absorb the rolling of a ship and the vibrations of an engine.

Moreover, the exhaust gas treatment devices 1 and 2 according to the first and second embodiments are used for exhaust gas treatment in ships. The present invention is not always used for this purpose and is defined by the appended claims. A use is possible in a vehicle with involving rolling, engines and requiring exhaust gas treatment or the like.

## Claims

1. An exhaust gas treatment device configured such that a catalyst unit (40) for treating exhaust gas is held in a vessel body (10) forming a gas passage (R) of a flow of the exhaust gas,
the exhaust gas treatment device comprising:
a downstream-side grid (30) provided downstream of the catalyst unit (40) along the gas passage (R);
an upstream-side grid (70) provided on an opposite side of the catalyst unit (40) from the downstream-side grid (30);
a retainer (80) that presses the catalyst unit (40) between the upstream-side grid (70) and the downstream-side grid (30); and
an elastic seal member (32) interposed between the downstream-side grid (30) and the catalyst unit (40),
wherein the elastic seal member (32) is elastically deformed by pressing the catalyst unit (40) with the retainer (80) and seals a gap between the downstream-side grid (30) and the catalyst unit (40), **characterized in that** the catalyst unit (40) comprises:
a plurality of tubular cases (41) filled with a catalyst (42); and
attachments (43) each of which holds one end of the tubular case (41),
the tubular cases (41) being configured in at least two stages with the attachments (43) interposed between the tubular cases (41),
the exhaust gas treatment device further comprising another retainer (54) that presses the attachment (43) in a direction perpendicular to a flowing direction of the exhaust gas.

2. The exhaust gas treatment device according to claim 1, further comprising an elastic member (72) interposed between the upstream-side grid (70) and the catalyst unit (40), wherein the elastic member (72) is elastically deformed by pressing the catalyst unit (40) with the retainer (80).

3. The exhaust gas treatment device according to claim 1, wherein the attachment (43) is also interposed between the tubular case (41) and the downstream-side grid (30).

4. The exhaust gas treatment device according to claim 1, further comprising a seal plate (51, 52) fixed to an interior of the vessel body (10); and
a seal member (55) that comes into contact with both of the seal plate (52) and the catalyst unit (40) so as to seal a gap between the seal plate (52) and the catalyst unit (40),
wherein the other retainer (54) presses the attachment (43) via the seal member (55).

## Patentansprüche

1. Abgasbehandlungsvorrichtung, die so ausgeführt ist, dass eine Katalysator-Einheit (40) zum Behandeln von Abgas in einem Behälterkörper (10) aufgenommen ist, der einen Gasdurchlass (R) für einen Strom des Abgases bildet,
wobei die Abgasbehandlungsvorrichtung umfasst:
ein stromab befindliches Gitter (30), das stromab von der Katalysator-Einheit (40) entlang des Gasdurchlasses (R) vorhanden ist;
ein stromauf befindliches Gitter (70), das an einer dem stromab befindlichen Gitter (30) gegenüberliegenden Seite der Katalysator-Einheit (40) vorhanden ist;
einen Halter (80), der die Katalysator-Einheit (40) zwischen das stromauf befindliche Gitter (70) und das stromab befindliche Gitter (30) drückt; sowie
ein elastisches Dichtungselement (32), das zwischen dem stromab befindlichen Gitter (30) und der Katalysator-Einheit (40) angeordnet ist,
**dadurch gekennzeichnet, dass** das elastische Dichtungselement (32) elastisch verformt wird, indem mit dem Halter (80) auf die Katalysator-Einheit (40) gedrückt wird, und es einen Spalt zwischen dem stromab befindlichen Gitter (30) und der Katalysator-Einheit (40) abdichtet,
wobei die Katalysator-Einheit (40) umfasst:
eine Vielzahl röhrenförmiger Gehäuse (41), die mit einem Katalysator (42) gefüllt sind; und
Anbringungseinrichtungen (43), von denen jede ein Ende des röhrenförmigen Gehäuses (41) hält,
wobei die röhrenförmigen Gehäuse (41) in wenigstens zwei Stufen ausgeführt sind und die Anbringungseinrichtungen (43) zwischen den röhrenförmigen Gehäusen (41) angeordnet sind,
und die Abgasbehandlungsvorrichtung außerdem einen weiteren Halter (54) umfasst, der die Anbringungseinrichtung (43) in eine Richtung senkrecht zu einer Strömungsrichtung des Abgases drückt.

2. Abgasbehandlungsvorrichtung nach Anspruch 1, die des Weiteren ein elastisches Element (72) umfasst, das zwischen dem stromauf befindlichen Gitter (70) und der Katalysator-Einheit (40) angeordnet ist,
wobei das elastische Element (72) elastisch verformt wird, indem mit dem Halter (80) auf die Katalysator-Einheit (40) gedrückt wird.

3. Abgasbehandlungsvorrichtung nach Anspruch 1, wobei die Anbringungseinrichtung (43) auch zwischen dem röhrenförmigen Gehäuse (41) und dem stromab befindlichen Gitter (30) angeordnet ist.

4. Abgasbehandlungsvorrichtung nach Anspruch 1, die des Weiteren eine Dichtungsplatte (51, 52), die in einem Innenraum des Behälterkörpers (10) fixiert ist; sowie
ein Dichtungselement (55) umfasst, das sowohl mit der Dichtungsplatte (52) als auch der Katalysator-Einheit (40) in Kontakt kommt, um einen Spalt zwischen der Dichtungsplatte (52) und der Katalysator-Einheit (40) abzudichten,
wobei der weitere Halter (54) über das Dichtungselement (55) auf die Anbringungseinrichtung (43) drückt.

## Revendications

1. Dispositif de traitement de gaz d'échappement configuré de telle sorte qu'une unité catalytique (40) pour le traitement de gaz d'échappement est maintenue dans un corps de récipient (10) formant un passage de gaz (R) d'un flux de gaz d'échappement,
le dispositif de traitement de gaz d'échappement comprenant:
un réseau (30) situé en aval de l'unité catalytique (40) le long du passage du gaz (R);
un réseau en amont (70) situé sur un côté de l'unité catalytique (40) opposé au réseau en aval (30);
un dispositif de retenue (80) qui presse l'unité catalytique (40) entre la grille du côté amont (70) et la grille du côté aval (30); et
un élément d'étanchéité élastique (32) interposé entre la grille côté aval (30) et l'unité catalytique (40),
dans lequel l'élément d'étanchéité élastique (32) est déformé élastiquement en pressant l'unité de catalyseur (40) avec le dispositif de retenue (80) et ferme un espace entre la grille côté aval (30) et l'unité de catalyseur (40),
**caractérisé en ce que** l'unité catalytique (40) comprend :
une pluralité de caisses tubulaires (41) remplies d'un catalyseur (42); et des attaches (43) qui maintiennent chacune une extrémité de l'étui tubulaire (41),
les étuis tubulaires (41) étant configurés en au moins deux étapes avec les attaches (43) interposées entre les étuis tubulaires (41),
le dispositif de traitement de gaz d'échappement comprenant en outre un autre dispositif de retenue (54) qui presse l'accessoire (43) dans une direction perpendiculaire à une direction d'écoulement de gaz d'échappement.

2. Dispositif de traitement de gaz d'échappement selon la revendication 1, comprenant en outre un élément élastique (72) interposé entre la grille (70) du côté amont et l'unité de catalyseur (40),
dans lequel l'élément élastique (72) est déformé élastiquement en comprimant l'unité de catalyseur (40) avec le dispositif de retenue (80).

3. Dispositif de traitement de gaz d'échappement selon la revendication 1,
dans lequel la fixation (43) est également intercalée entre le boîtier tubulaire (41) et la grille côté aval (30).

4. Dispositif de traitement de gaz d'échappement selon la revendication 1, comprenant en outre une plaque d'étanchéité (51, 52) fixée à l'intérieur du corps de la cuve (10); et
un élément d'étanchéité (55) qui entre en contact à la fois avec la plaque d'étanchéité (52) et l'unité de catalyseur (40) afin de sceller un espace entre la plaque d'étanchéité (52) et l'unité de catalyseur (40),
dans lequel l'autre élément de retenue (54) appuie sur l'attache (43) par l'intermédiaire de l'élément d'étanchéité (55).
